# EUROPEAN PATENT APPLICATION

(11) **EP 4 428 460 A1**
(43) Date of publication of application: **11.09.2024**
(21) Application number: 22924018.9
(22) Date of filing: 20.10.2022
(51) Int. Cl.: F24F 7/007, F24F 7/08, F24F 11/81, F24F 11/83, F24F 11/86, F24F 13/02, F24F 13/22

(54) **VENTILATION DEVICE**

(30) Priority: 31.01.2022 JP 2022012802
(71) Applicant: Daikin Industries, Ltd., Osaka-shi, Osaka 530-0001 (JP)
(72) Inventor: MASUDA, Fumika, Osaka-shi, Osaka 530-0001 (JP); NAKANO, Akihiro, Osaka-shi, Osaka 530-0001 (JP); TAKAHASHI, Ken, Osaka-shi, Osaka 530-0001 (JP)
(74) Representative: Hoffmann Eitle
(86) International application number: PCT/JP2022/039101
(87) International publication number: WO 2023/145162

(57) **Abstract**

A ventilation device includes a control unit configured to adjust a temperature of blown air supplied to a duct based on a temperature and a humidity of air in a ceiling space.

## Description

### TECHNICAL FIELD

The present disclosure relates to a ventilation device.

### BACKGROUND ART

A ventilation device disclosed in Patent Document 1 includes an air supply fan, an exhaust fan, a first heat exchanger (a total heat exchange element), and a second heat exchanger (an indoor heat exchanger). When the air supply fan and the exhaust fan operate, the room air and the outdoor air exchange heat in the first heat exchanger. The outdoor air that has exchanged heat in the first heat exchanger is cooled or heated in the second heat exchanger and is then supplied into a room. The room air that has exchanged heat in the first heat exchanger is discharged out of the room.

### CITATION LIST

### PATENT DOCUMENT

Patent Document 1: Japanese Unexamined Patent Publication No. 2011-75117

### SUMMARY OF THE INVENTION

### TECHNICAL PROBLEMS

A ventilation device as described in Patent Document 1 supplies air to an indoor space through a duct disposed behind a ceiling. Here, when the second heat exchanger of the ventilation device serves as an evaporator to cool the air, the air with a relatively low temperature flows through the duct. When the air in the ceiling space has relatively high temperature and humidity, this air has a high dew point temperature. Thus, there is a problem that the moisture in the air in the ceiling space condenses on the surface of the duct.

It is an objective of the present disclosure to provide a ventilation device capable of reducing dew condensation on a surface of a duct disposed in a ceiling space.

### SOLUTION TO THE PROBLEMS

A first aspect is directed to a ventilation device including: a casing (12) having an air supply path (13) for supplying outdoor air to an indoor space (5) through a duct (D3) disposed in a ceiling space (8) and an exhaust path (14) for discharging indoor air to an outside of a room; an air supply fan (22) disposed in the air supply path (13); an exhaust fan (23) disposed in the exhaust path (14); a first heat exchanger (21) configured to allow heat exchange between air flowing through the air supply path (13) and air flowing through the exhaust path (14); a refrigerant circuit (R) including a compressor (82) and a second heat exchanger (52) as an evaporator disposed downstream of the first heat exchanger (21) in the air supply path (13); and a control unit (100) configured to adjust a temperature of blown air supplied to the duct (D3) based on a temperature and a humidity of air in the ceiling space (8).

In the first aspect, the control unit (100) is configured to adjust the temperature of the blown air supplied to the duct (D3) based on the temperature and humidity of the air in the ceiling space (8). Here, the temperature and humidity of the air in the ceiling space (8) are indexes of a likelihood of dew condensation of the air in the ceiling space (8). Thus, by the blow-out temperature being adjusted by this control, the dew condensation on the surface of the duct (D3) can be reduced.

A second aspect is an embodiment of the first aspect. In the second aspect, the control unit (100) is configured to adjust the temperature of the blown air based on the temperature and the humidity of the air in the ceiling space (8) and a temperature and a humidity of air in the indoor space (5).

In the second aspect, the control unit (100) is configured to adjust the temperature of the blown air based on not only the temperature and humidity of the air in the space (8) but also the temperature and humidity of the air in the indoor space (5). Here, the temperature and humidity of the air in the indoor space (5) are indexes of a likelihood of dew condensation of the air in the indoor space (5). Thus, by the blow-out temperature being adjusted by this control, the dew condensation in the indoor space (5) can be also reduced.

A third aspect is an embodiment of the first or second aspect. In the third aspect, the control unit (100) is configured to adjust the temperature of the blown air based on the temperature and the humidity of one of the air in the space (8) and the air in the indoor space (5) which is more likely to produce dew condensation.

In the third aspect, the control unit (100) adjusts the blow-out temperature based on the temperature and humidity of one of the air in the space (8) and the air in the indoor space (5) which is more likely to produce dew condensation. If the dew condensation of the air which is more likely to occur can be reduced by this control, the dew condensation of the other air can be reduced. Thus, by this control, the dew condensation both on the surface of the duct (D3) and in the indoor space (5) can be reduced.

A fourth aspect of the present disclosure is an embodiment of any one of the first to third aspects. In the fourth aspect, the control unit (100) is configured to adjust the temperature of the blown air by adjusting an evaporation temperature of a refrigerant in the second heat exchanger (52) as the evaporator based on the temperature and the humidity of the air in the space (8).

In the fourth aspect, by the evaporation temperature of the refrigerant in the second heat exchanger (52) being adjusted, the temperature of the blown air can be adjusted, and also the dew condensation on the surface of the duct (D3) can be reduced.

A fifth aspect is an embodiment of any one of the first to third aspects. In the fifth aspect, the control unit (100) is configured to adjust the temperature of the blown air by adjusting the number of rotations of the compressor (82) based on the temperature and the humidity of the air in the space (8).

In the fifth aspect, the control unit (100) can adjust the temperature of the blown air by adjusting the number of rotations of the compressor (82), and also the dew condensation on the surface of the duct (D3) can be reduced.

In a sixth aspect, the ventilation device further includes a heater (52b) for a reheating operation of heating air having passed through the second heat exchanger (52) as the evaporator, wherein the control unit (100) is configured to adjust the temperature of the blown air by controlling the reheating operation by the heater (52b) based on the temperature and humidity of the air in the ceiling space (8).

In the sixth aspect, by the air cooled by the second heat exchanger (52) as the vaporizer being heated by the heater (52b) for the reheating operation, the air can be dehumidified. The control unit (100) can adjust the temperature of the blown air by controlling the reheating operation of the heater (52b), and thus the dew condensation on the surface of the duct (D3) can be reduced.

In a seventh aspect, the control unit (100) is configured to adjust the temperature of the blown air by adjusting a volume of air of the air supply fan (22) based on the temperature and the humidity of the air in the space (8).

In the seventh aspect, the control unit (100) can adjust the temperature of the blown air by adjusting the volume of air of the air supply fan (22), and also the dew condensation on the surface of the duct (D3) can be reduced.

### BRIEF DESCRIPTION OF THE DRAWINGS

FIG. 1 is a diagram illustrating a general configuration of a building including a ventilation device according to an embodiment.
FIG. 2 is a schematic configuration diagram of a refrigerant circuit of the ventilation device.
FIG. 3 is a vertical sectional view showing an internal structure of the ventilation device.
FIG. 4 is a block diagram of the ventilation device.
FIG. 5 is a flowchart of anti-dew control.
FIG. 6 contains tables about controls based on first air and second air, and showing the relationship among conditions, details of the conditions, statuses, and details of the controls.
FIG. 7 is a flowchart of anti-dew control according to a second variation.
FIG. 8 is a flowchart of anti-dew control according to a third variation.
FIG. 9 is a flowchart of anti-dew control according to a fourth variation.

### DESCRIPTION OF EMBODIMENTS

### <<Embodiment>>

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding.

### (1) Outline of Ventilation Device

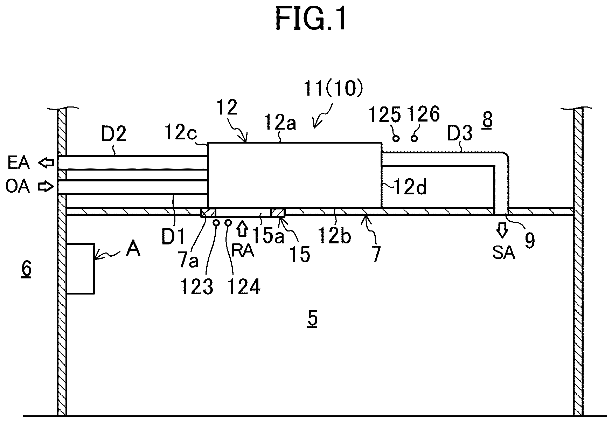

A ventilation device (10) of the present disclosure ventilates an indoor space (5). As illustrated in FIG. 1, the ventilation device (10) ventilates the indoor space (5) in a building, such as an ordinary house. The ventilation device (10) supplies outdoor air (OA) in an outdoor space (6), as supply air (SA), into a room. At the same time, the ventilation device (10) exhausts room air (RA) in the indoor space (5), as exhaust air (EA), to the outside of the room. The "indoor space" as used herein includes a habitable room, such as a living room, and a non-habitable room, such as a corridor. The ventilation device (10) adjusts the temperature of air in the indoor space (5).

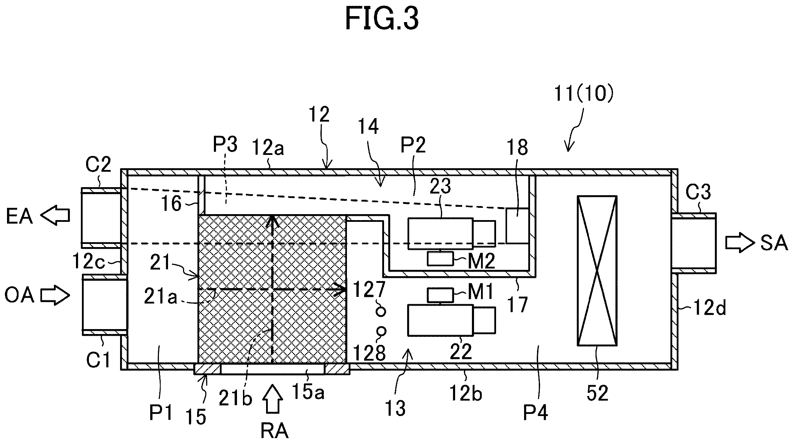

The ventilation device (10) includes a ventilation unit (11). The ventilation unit (11) is disposed in a ceiling space (8). The ventilation unit (11) includes a casing (12). As shown in FIG. 3, the casing (12) has an air supply path (13) and an exhaust path (14). The ventilation unit (11) includes an air supply fan (22), an exhaust fan (23), a total heat exchanger (21), and a utilization heat exchanger (52).

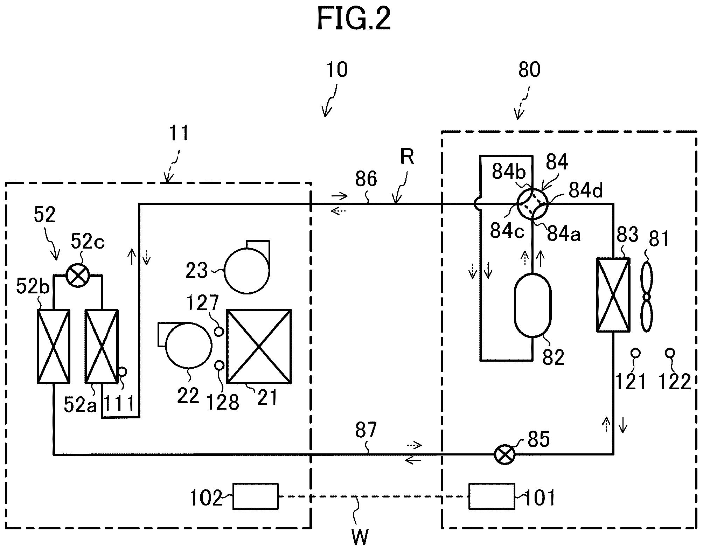

As illustrated in FIG. 2, the ventilation device (10) includes a heat source unit (80). The heat source unit (80) and the utilization heat exchanger (52) are connected together via a first connection pipe (86) and a second connection pipe (87). This connection of the pipes forms a refrigerant circuit (R) The refrigerant circuit (R) is filled with a refrigerant. The refrigerant is, for example, R32 (difluoromethane). The refrigerant circulates in the refrigerant circuit (R) to perform a refrigeration cycle. The first connection pipe (86) is a gas-side connection pipe. The second connection pipe (87) is a liquid-side connection pipe.

### (2) Duct

As illustrated in FIG. 1, the ventilation unit (11) is connected to an outside air duct (D1), an exhaust duct (D2), and an air supply duct (D3). The inlet end of the outside air duct (D1) communicates with the outdoor space (6). The outlet end of the outside air duct (D1) is joined to the inlet end of the air supply path (13). The inlet end of the exhaust duct (D2) is joined to the outlet end of the exhaust path (14). The outlet end of the exhaust duct (D2) communicates with the outdoor space (6). The inlet end of the air supply duct (D3) is joined to the outlet end of the air supply path (13). The outflow end of the air supply duct (D3) communicates with the indoor space (5).

### (3) Heat Source Unit

The heat source unit (80) illustrated in FIG. 2 is disposed in the outdoor space (6). The heat source unit (80) includes a heat source fan (81). The heat source unit (80) includes a compressor (82), a heat source heat exchanger (83), a switching mechanism (84), and an expansion valve (85) as components of the refrigerant circuit (R).

The compressor (82) compresses sucked refrigerant. The compressor (82) discharges the compressed refrigerant. The compressor (82) is of an inverter type.

The heat source heat exchanger (83) is a fin-and-tube air heat exchanger. The heat source heat exchanger (83) is an outdoor heat exchanger that allows heat exchange between the refrigerant flowing therethrough and outdoor air.

The heat source fan (81) is disposed near the heat source heat exchanger (83). The heat source fan (81) of this example is a propeller fan. The heat source fan (81) transfers air passing through the heat source heat exchanger (83).

The switching mechanism (84) changes the flow path of the refrigerant circuit (R) so as to switch between a first refrigeration cycle which is a cooling cycle and a second refrigeration cycle which is a heating cycle. The switching mechanism (84) is a four-way switching valve. The switching mechanism (84) has a first port (84a), a second port (84b), a third port (84c), and a fourth port (84d). The first port (84a) of the switching mechanism (84) is joined to the discharge portion of the compressor (82). The second port (84b) of the switching mechanism (84) is joined to the suction portion of the compressor (82). The third port (84c) of the switching mechanism (84) is joined to the gas-side end of the utilization heat exchanger (52) through the first connection pipe (86). The fourth port (84d) of the switching mechanism (84) is joined to the gas-side end of the heat source heat exchanger (83).

The switching mechanism (84) switches between a first state and a second state. The switching mechanism (84) in the first state (state indicated by solid lines in FIG. 2) causes the first port (84a) and the fourth port (84d) to communicate with each other, and causes the second port (84b) and the third port (84c) to communicate with each other. The switching mechanism (84) in the second state (state indicated by dashed lines in FIG. 2) causes the first port (84a) and the third port (84c) to communicate with each other, and causes the second port (84b) and the fourth port (84d) to communicate with each other.

The expansion valve (85) has one end joined to the liquid-side end of the heat source heat exchanger (83), and the other end joined to the liquid-side end of the utilization heat exchanger (52) via the second connection pipe (87). The expansion valve (85) is an electronic expansion valve having a variable opening degree.

### (4) Detailed Structure of Ventilation Unit

### (4-1) Casing

As shown in FIGS. 1 and 3, the casing (12) is disposed in the ceiling space (8). the casing (12) is formed in a rectangular parallelepiped shape. The casing (12) extends along a ceiling (7). The casing (12) has a top plate (12a), a bottom plate (12b), and four side plates. The four side plates include a first side plate (12c) and a second side plate (12d) facing each other.

The top plate (12a) forms an upper surface of the casing (12). The bottom plate (12b) forms a lower surface of the casing (12). The first side plate (12c) forms the side surface of the casing (12) at one end in the longitudinal direction. The second side plate (12d) forms the side surface of the casing (12) at the other end in the longitudinal direction.

The first side plate (12c) is provided with a first duct joint (C1) and a second duct joint (C2). The first duct joint (C1) and the second duct joint (C2) are tubular. The first duct joint (C1) and the second duct joint (C2) protrude laterally from the outer surface of the first side plate (12c). The outflow end of the outside air duct (D1) is connected to the first duct joint (C1). The inflow end of the exhaust duct (D2) is connected to the second duct joint (C2).

The second side plate (12d) is provided with a third duct joint (C3). The third duct joint (C3) is tubular. The third duct joint (C3) protrudes laterally from the outer surface of the second side plate (12d). The third duct joint (C3) is connected to the inflow end of the air supply duct (D3).

An indoor panel (15) is provided on the bottom plate (12b) of the casing (12). As shown in FIGS. 1 and 3, the indoor panel (15) is provided inside an opening (7a) penetrating the ceiling (7). The indoor panel (15) faces the indoor space (5). The indoor panel (15) has an inlet (15a). The inlet (15a) allows the indoor space (5) and the inlet end of the exhaust path (14) to communicate with each other.

As shown in FIG. 1, the ceiling (7) is provided with an air supply port (9). The air supply port (9) is connected to an outflow end of the air supply duct (D3). The air supply port (9) faces the indoor space (5). The air that has passed through the air supply duct (D3) is blown into the indoor space (5) through the air supply port (9).

### (4-2) Partition Plate

As shown in FIG. 3, a first partition plate (16) and a second partition plate (17) are provided in the casing (12). The first partition plate (16) is closer to the first side plate (12c). The second partition plate (17) is closer to the top plate (12a). A first flow path (P1), a second flow path (P2), a third flow path (P3), and a fourth flow path (P4) are provided inside the casing (12).

The first flow path (P1) is defined by the first side plate (12c), the first partition plate (16), and the total heat exchanger (21). The first flow path (P1) forms a portion of the air supply path (13) located upstream of the total heat exchanger (21). The first flow path (P1) communicates with the first duct joint (C1).

The second flow path (P2) is defined by the top plate (12a), the first partition plate (16), the second partition plate (17), and the total heat exchanger (21). The third flow path (P3) is connected to the outflow end of the second flow path (P2) via a communication port (18). The third flow path (P3) is behind the second flow path (P2) in the widthwise direction of the casing (12). The second flow path (P2) and the third flow path (P3) form a flow path of the exhaust path (14) located downstream of the total heat exchanger (21). The third flow path (P3) communicates with the second duct joint (C2).

The fourth flow path (P4) is defined by the top plate (12a), the second side plate (12d), the bottom plate (12b), the second partition plate (17), and the total heat exchanger (21). The fourth flow path (P4) forms a portion of the air supply path (13) located downstream of the total heat exchanger (21). The fourth flow path (P4) communicates with the third duct joint (C3).

### (4-3) Total Heat Exchanger

The total heat exchanger (21) corresponds to the first heat exchanger according to the present disclosure. The total heat exchanger (21) allows heat exchange between the air flowing through the air supply path (13) and the air flowing through the exhaust path (14). The total heat exchanger (21) is formed in a rectangular parallelepiped shape. The total heat exchanger (21) is disposed so that its lower surface lies along the bottom plate (12b). As schematically illustrated in FIG. 3, the total heat exchanger (21) has therein an air supply internal flow path (21a) and an exhaust internal flow path (21b). The air supply internal flow path (21a) and the exhaust internal flow path (21b) are orthogonal to each other.

An inflow portion of the air supply internal flow path (21a) is joined to the first flow path (P1). An outflow portion of the air supply internal flow path (21a) is joined to the fourth flow path (P4). An inflow portion of the exhaust internal flow path (21b) is joined to the inlet (15a). An outflow portion of the exhaust internal flow path (21b) is joined to the second flow path (P2).

The total heat exchanger (21) transfers heat between air in the air supply internal flow path (21a) and air in the exhaust internal flow path (21b). The total heat exchanger (21) transfers moisture between air in the air supply internal flow path (21a) and air in the exhaust internal flow path (21b). As can be seen, the total heat exchanger (21) transfers latent heat and sensible heat between the air in the air supply internal flow path (21a) and the air in the exhaust internal flow path (21b).

### (4-4) Air Supply Fan and Exhaust Fan

The air supply fan (22) is disposed in the fourth flow path (P4). The air supply fan (22) is disposed upstream of the utilization heat exchanger (52) in the fourth flow path (P4). The exhaust fan (23) is disposed in the second flow path (P2). The air supply fan (22) transfers air in the air supply path (13). The exhaust fan (23) transfers air in the exhaust path (14). The air supply fan (22) and the exhaust fan (23) are sirocco fans. The air supply fan (22) and the exhaust fan (23) may be of a turbo type or a propeller type. The air supply fan (22) and the exhaust fan (23) each have a respective rotation shaft extending vertically. The air supply fan (22) and the exhaust fan (23) are adjacent to each other in the vertical direction.

The number of rotations of a first motor (M1) of the air supply fan (22) is variable. The first motor (M1) is a DC fan motor whose number of rotations is adjusted by a control circuit. The air supply fan (22) is configured such that its volume of air is variable. The number of rotations of a second motor (M2) of the exhaust fan (23) is variable. The second motor (M2) is a DC fan motor whose number of rotations is adjusted by a control circuit. The exhaust fan (23) is configured such that its volume of air is variable.

### (4-5) Utilization Heat Exchanger

The utilization heat exchanger (52) corresponds to the second heat exchanger of the present disclosure. The utilization heat exchanger (52) is disposed downstream of the total heat exchanger (21) in the air supply path (13). As shown in FIG. 2, the utilization heat exchanger (52) includes a first heat exchange unit (52a), a second heat exchange unit (52b), and a decompression valve (52c). The first heat exchange unit (52a) and the second heat exchange unit (52b) are connected to each other via a refrigerant pipe provided with the decompression valve (52c).

The first heat exchange unit (52a) and the second heat exchange unit (52b) exchange heat between the refrigerant flowing therethrough and the air flowing through the air supply path (13). The first heat exchange unit (52a) and the second heat exchange unit (52b) are each a fin-and-tube air heat exchanger.

The decompression valve (52c) decompresses the refrigerant. The decompression valve (52c) is an electronic expansion valve with an adjustable opening degree. The decompression valve (52c) may be an electromagnetic valve. When the decompression valve (52c) is an electromagnetic valve, the decompression valve (52c) is switched between a fully-open state and a state of reducing the opening degree to decompress the refrigerant.

### (5) Sensor

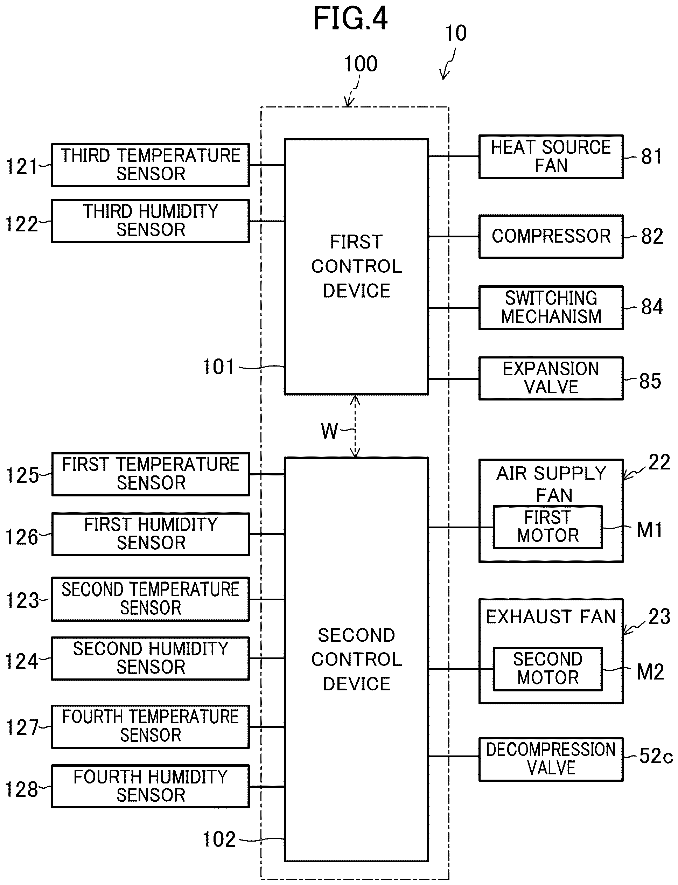

As also shown in FIGS. 2 and 4, the ventilation device (10) includes a plurality of refrigerant sensors and a plurality of air sensors.

The plurality of refrigerant sensors include a first refrigerant temperature sensor (111). The first refrigerant temperature sensor (111) detects an evaporation temperature Te of the utilization heat exchanger (52) functioning as an evaporator. The refrigerant sensors may include a low-pressure sensor for detecting a low pressure of the refrigerant circuit (R). The evaporation temperature Te may be obtained from a saturation temperature corresponding to the low pressure.

The plurality of air sensors include a first temperature sensor (125), a first humidity sensor (126), a second temperature sensor (123), a second humidity sensor (124), a third temperature sensor (121), a third humidity sensor (122), a fourth temperature sensor (127), and a fourth humidity sensor (128).

As shown in FIG. 1, the first temperature sensor (125) and the first humidity sensor (126) are arranged in the ceiling space (8). The first temperature sensor (125) and the first humidity sensor (126) are arranged near the third duct joint (C3). In other words, the first temperature sensor (125) and the first humidity sensor (126) are arranged near the air supply duct (D3). The first temperature sensor (125) detects a temperature of first air which is air in the space (8). The first humidity sensor (126) detects humidity of the first air which is air in the space (8). To be exact, the first humidity sensor (126) detects relative humidity of the first air. The first humidity sensor (126) may detect absolute humidity of the first air. The first temperature sensor (125) and the first humidity sensor (126) only need to be arranged in the space (8), and may be arranged near the exhaust duct (D2), for example.

As shown in FIG. 1, the second temperature sensor (123) and the second humidity sensor (124) are arranged in the indoor space (5). The second temperature sensor (123) and the second humidity sensor (124) are arranged near the inlet (15a), for example. The second temperature sensor (123) detects a temperature of the room air (RA), which is second air, in the indoor space (5). The second humidity sensor (124) detects humidity of the room air (RA). To be exact, the second humidity sensor (124) detects relative humidity of the room air (RA). The second humidity sensor (124) may detect absolute humidity of the room air (RA).

As shown in FIG. 2, the third temperature sensor (121) and the third humidity sensor (122) are provided in the heat source unit (80). The third temperature sensor (121) detects a temperature of the outdoor air (OA). The third humidity sensor (122) detects humidity of the outdoor air (OA). To be exact, the third humidity sensor (122) detects relative humidity of the outdoor air (OA). The third humidity sensor (122) may detect absolute humidity of the outdoor air (OA).

As shown in FIG. 3, the fourth temperature sensor (127) and the fourth humidity sensor (128) are provided inside the casing (12) of the ventilation unit (11). The fourth temperature sensor (127) and the fourth humidity sensor (128) are arranged between the total heat exchanger (21) and the utilization heat exchanger (52) in the air supply path (13). To be exact, the fourth temperature sensor (127) and the fourth humidity sensor (128) are arranged between the total heat exchanger (21) and the air supply fan (22) in the air supply path (13). The fourth temperature sensor (127) detects a temperature of the air which has passed through the total heat exchanger (21) but has not yet passed through the utilization heat exchanger (52). The fourth humidity sensor (128) detects humidity of the air which has passed through the total heat exchanger (21) but has not yet passed through the utilization heat exchanger (52). To be exact, the fourth humidity sensor (128) detects relative humidity of this air. The fourth humidity sensor (128) may detect absolute humidity of this air.

### (6) Control Unit

The ventilation device (10) includes a control unit (100). As shown in FIGS. 2 and 4, the control unit (100) includes a first control device (101) and a second control device (102). The first control device (101) is provided in the heat source unit (80). The second control device (102) is provided in the ventilation unit (11). The first control device (101) and the second control device (102) are connected to each other by a communication line (W). The communication line (W) is wired or wireless.

Each of the first control device (101) and the second control device (102) includes a micro control unit (MCU), an electric circuit, and an electronic circuit. The MCU includes a central processing unit (CPU), a memory, and a communication interface. The memory stores various programs to be executed by the CPU.

The first control device (101) controls the compressor (82), the heat source fan (81), the switching mechanism (84), and the expansion valve (85). The first control device (101) receives the values detected by the third temperature sensor (121) and the third humidity sensor (122). The first control device (101) obtains absolute humidity of the outdoor air (OA) based on a temperature of the outdoor air (OA) and relative humidity of the outdoor air (OA).

The second control device (102) controls the air supply fan (22) and the exhaust fan (23). To be specific, the second control device (102) according to this embodiment controls the number of rotations of the first motor (M1) so that the air supply fan (22) yields a target volume of air. The second control device (102) controls the number of rotations of the second motor (M2) so that the exhaust fan (23) yields a target volume of air. In this manner, the air supply fan (22) and the exhaust fan (23) according to this embodiment are controlled by what is called constant air volume control.

The second control device (102) receives the values detected by the second temperature sensor (123), the second humidity sensor (124), the first temperature sensor (125), the first humidity sensor (126), the fourth temperature sensor (127), and the fourth humidity sensor (128). The second control device (102) obtains absolute humidity of the room air (RA), based on a temperature of the room air (RA) and relative humidity of the room air (RA). The second control device (102) obtains absolute humidity of the first air, based on a temperature of the first air and relative humidity of the first air. The second control device (102) obtains absolute humidity of the second air, based on a temperature of the second air and relative humidity of the second air.

### (7) Operation

An operation of the ventilation device (10) will be described with reference to FIGS. 2 and 3. The ventilation device (10) performs a cooling operation, a heating operation, and a reheating and dehumidifying operation. In FIG. 2, the flow of the refrigerant in the cooling operation is indicated by solid arrows, and the flow of the refrigerant in the heating operation is indicated by dashed arrows.

### (7-1) Cooling Operation

In the cooling operation, the control unit (100) operates the compressor (82), the heat source fan (81), the air supply fan (22), and the exhaust fan (23). The control unit (100) sets the switching mechanism (84) to a first state, reduces the opening degree of the expansion valve (85), and fully opens the decompression valve (52c). The first heat exchange unit (52a) and the second heat exchange unit (52b) function as evaporators.

In the ventilation unit (11) during the cooling operation, operation of the exhaust fan (23) causes room air (RA) to be taken into the inlet (15a). Operation of the air supply fan (22) causes outdoor air (OA) to be taken into the first flow path (P1). The air in the inlet (15a) flows through the exhaust internal flow path (21b) of the total heat exchanger (21). The air in the first flow path (P1) flows through the air supply internal flow path (21a) of the total heat exchanger (21).

For example, in summer, the indoor space (5) is cooled by the other air conditioner (A) shown in FIG. 1. In this case, the room air (RA) has a lower temperature than the outdoor air (OA). In addition, the room air (RA) has a lower humidity than the outdoor air (OA). Accordingly, in the total heat exchanger (21), the air in the air supply internal flow path (21a) is cooled by the air in the exhaust internal flow path (21b). At the same time, in the total heat exchanger (21), the moisture in the air in the air supply internal flow path (21a) moves to the air in the exhaust internal flow path (21b).

The air which has flowed out of the exhaust internal flow path (21b) to the second flow path (P2) flows through the third flow path (P3) and the exhaust duct (D2), and is discharged as exhaust air (EA) to the outdoor space (6).

The air cooled and dehumidified in the air supply internal flow path (21a) flows out to the fourth flow path (P4). This air is cooled by the first heat exchange unit (52a) and the second heat exchange unit (52b) of the utilization heat exchanger (52). The cooled air flows through the air supply duct (D3) and is supplied as the supply air (SA) to the indoor space (5).

### (7-2) Heating Operation

In the heating operation, the control unit (100) operates the compressor (82), the heat source fan (81), the air supply fan (22), and the exhaust fan (23). The control unit (100) sets the switching mechanism (84) to a second state, reduces the opening degree of the expansion valve (85), and fully opens the decompression valve (52c). The first heat exchange unit (52a) and the second heat exchange unit (52b) function as a radiator or a condenser.

In the ventilation unit (11) during the heating operation, operation of the exhaust fan (23) causes room air (RA) to be taken into the inlet (15a). Operation of the air supply fan (22) causes outdoor air (OA) to be taken into the first flow path (P1). The air in the inlet (15a) flows through the exhaust internal flow path (21b) of the total heat exchanger (21). The air in the first flow path (P1) flows through the air supply internal flow path (21a) of the total heat exchanger (21).

For example, in winter, the indoor space (5) is heated by the other air conditioner (A) shown in FIG. 1. In this case, the room air (RA) has a higher temperature than the outdoor air (OA). In addition, the room air (RA) has a higher humidity than the outdoor air (OA). Accordingly, in the total heat exchanger (21), the air in the air supply internal flow path (21a) is heated by the air in the exhaust internal flow path (21b). At the same time, in the total heat exchanger (21), the moisture in the air in the exhaust internal flow path (21b) moves to the air in the air supply internal flow path (21a).

The air which has flowed out of the exhaust internal flow path (21b) to the second flow path (P2) flows through the third flow path (P3) and the exhaust duct (D2), and is discharged as exhaust air (EA) to the outdoor space (6).

The air heated and humidified in the air supply internal flow path (21a) flows out to the fourth flow path (P4). This air is heated by the first heat exchange unit (52a) and the second heat exchange unit (52b) of the utilization heat exchanger (52). The heated air flows through the air supply duct (D3) and is supplied as the supply air (SA) to the indoor space (5).

### (7-3) Reheating and Dehumidifying Operation

In the reheating and dehumidifying operation, the control unit (100) operates the compressor (82), the heat source fan (81), the air supply fan (22), and the exhaust fan (23). The control unit (100) sets the switching mechanism (84) to the first state, fully opens the expansion valve (85), and reduces the opening degree of the decompression valve (52c). The first heat exchange unit (52a) functions as an evaporator, and the second heat exchange unit (52b) functions as a radiator or a condenser.

For example, in summer, as in the cooling operation, in the total heat exchanger (21), the air in the air supply internal flow path (21a) is cooled by the air in the exhaust internal flow path (21b). At the same time, in the total heat exchanger (21), the moisture in the air in the air supply internal flow path (21a) moves to the air in the exhaust internal flow path (21b).

The air which has flowed out of the exhaust internal flow path (21b) to the second flow path (P2) flows through the third flow path (P3) and the exhaust duct (D2), and is discharged as exhaust air (EA) to the outdoor space (6).

The air cooled and dehumidified in the air supply internal flow path (21a) flows out to the fourth flow path (P4). This air is cooled to a temperature lower than or equal to the dew point temperature in the first heat exchange unit (52a) of the utilization heat exchanger (52). Accordingly, the moisture in the air is condensed and this air is dehumidified. The air cooled and dehumidified in the first heat exchange unit (52a) is heated in the second heat exchange unit (52b). Consequently, an excessive drop in the temperature of the air can be reduced, and the relative humidity of this air can be lowered. The air heated in the second heat exchange unit (52b) flows through the air supply duct (D3) and is supplied as the supply air (SA) to the indoor space (5).

### (8-1) Problem of Dew Condensation

In the operation, such as the cooling operation described above, in which the utilization heat exchanger (52) functions as an evaporator, the air is cooled by the utilization heat exchanger (52). The cooled air is supplied as blown air from the air supply path (13) to the air supply duct (D3). The air supply duct (D3) is disposed in the ceiling space (8). Accordingly, if blown air with a relatively low temperature flows through the air supply duct (D3) under the condition that the first air in the space (8) has a high temperature or humidity, the temperature on the surface of the air supply duct (D3) may lower. Accordingly, the moisture in the first air may condense on the surface of the air supply duct (D3).

In particular, the ventilation device (10) according to this example is targeted at general houses, and the air supply duct (D3) has a smaller diameter than that for a business purpose. For example, one air supply duct (D3) has an outer diameter of about 50 mm. Particularly on the surface of the air supply duct (D3) with such a small diameter, dew condensation is likely to occur.

In addition, the blown air supplied to the air supply duct (D3) flows out through the air supply port (9) to the indoor space (5). If blown air with a relatively low temperature is supplied to the indoor space (5) under the condition that the first air in the indoor space (5) has a high temperature or humidity, the moisture in the second air near the air supply port (9) may condense on a surface, such as the ceiling (7).

### (8-2) Anti-Dew Control

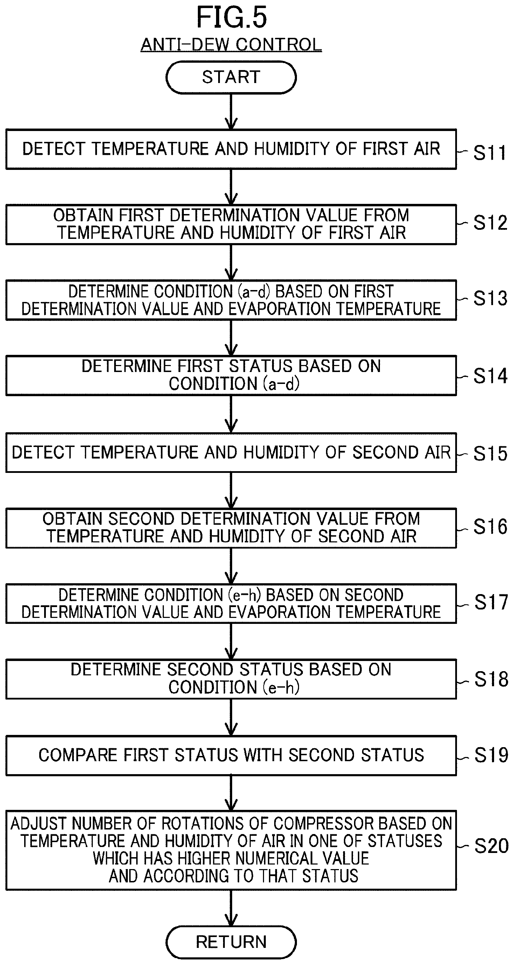

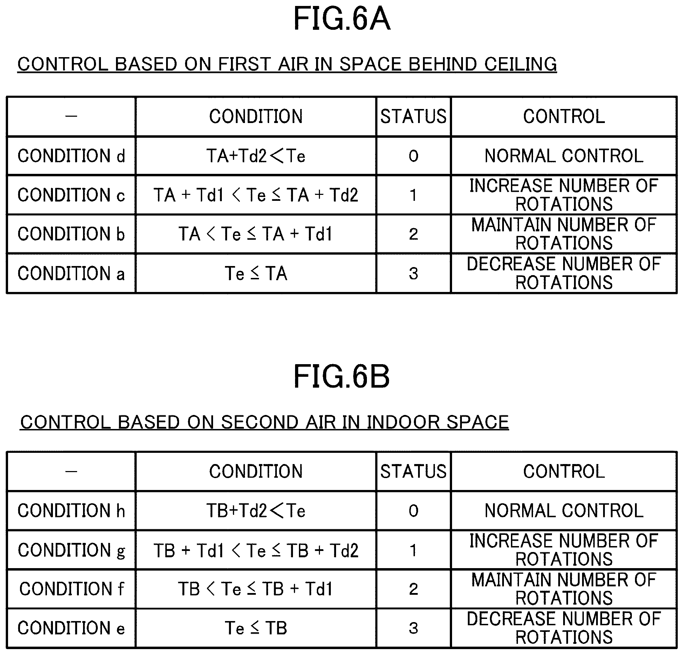

The ventilation device (10) performs anti-dew control (first control) for solving the problem of dew condensation described above. The anti-dew control will be described in detail with reference to FIGS. 5 and 6.

### (8-2-1) Anti-Dew Control

The control unit (100) executes the anti-dew control in an operation in which the utilization heat exchanger (52) functions as an evaporator. An example of this operation is a cooling operation, but also includes a dehumidifying operation of cooling and dehumidifying air in the utilization heat exchanger (52), and an operation in which a part of the utilization heat exchanger (52) functions as an evaporator (e.g., the reheating and dehumidifying operation described above).

In the anti-dew control, the control unit (100) adjusts the temperature of the blown air to be supplied to the air supply duct (D3), based on the temperature and relative humidity of the first air in the ceiling space (8) and the temperature and relative humidity of the second air in the indoor space (5). The control unit (100) according to this example adjusts the temperature of this blown air by adjusting the number of rotations of the compressor (82) and further the evaporation temperature of the utilization heat exchanger (52).

As shown in FIG. 5, when the anti-dew control starts, in step S11, the first temperature sensor (125) detects the temperature of the air, which is the first air, in the ceiling space (8). In addition, the first humidity sensor (126) detects the humidity of the first air.

In step S12, the control unit (100) obtains a first determination value TA from the temperature and humidity of the first air. The first determination value TA corresponds to the evaporation temperature Te for reducing dew condensation on the surface of the duct (D3). When the evaporation temperature Te becomes lower than the first determination value TA, dew condensation may occur on the surface of the air supply duct (D3). The first determination value TA is determined using a function or table where the temperature and humidity of the first air serve as parameters. The first determination value TA increases as the temperature and humidity of the first air increase.

In step S13, the control unit (100) determines which one of the conditions (a) to (d) is satisfied, based on the first determination value TA and the evaporation temperature Te. As shown in FIG. 6, the control unit (100) determines that the condition a is satisfied when Te ≤ TA, that the condition b is satisfied when TA < Te ≤ TA + Td1, that the condition c is satisfied when TA + Td1 ≤ Te ≤ TA + Td2, and that the condition d is satisfied when TA + Td2 < Te. Td1 and Td2 shown in FIG. 6 are temperatures to be added to the first determination value TA and the second determination value TB. For example, Td1 is set to 1.0°C, and Td2 is set to 1.5°C.

In step S14, the control unit (100) obtains a first status corresponding to the condition determined in step S13. The control unit (100) sets the first status to "3" when the condition a is satisfied, "2" when the condition b is satisfied, "1" when the condition c is satisfied, and "0" when the condition d is satisfied. The first status represents a likelihood of dew condensation, and the risk of dew condensation increases as the numerical value of the first status increases.

In step S15, the second temperature sensor (123) detects the temperature of the room air (RA) which is the second air. In addition, the second humidity sensor (124) detects the humidity of the second air.

In step S16, the control unit (100) obtains a second determination value TB from the temperature and humidity of the second air. The second determination value TB corresponds to the evaporation temperature Te for reducing dew condensation in the indoor space (5) near the air supply port (9). When the evaporation temperature Te becomes lower than the second determination value TB, dew condensation may occur near the air supply port (9). The second determination value TB is determined using a function or table where the temperature and humidity of the second air serve as parameters. The second determination value TB increases as the temperature and humidity of the second air increase.

In step S17, the control unit (100) determines which one of the conditions (e) to (h) is satisfied, based on the second determination value TB and the evaporation temperature Te. As shown in FIG. 6, the control unit (100) determines that the condition e is satisfied when Te ≤ TB, that the condition f is satisfied when TB < Te ≤ TB + Td1, that the condition g is satisfied when TB + Td1 ≤ Te ≤ TB + Td2, and that the condition h is satisfied when TB + Td2 < Te.

In step S18, the control unit (100) obtains a second status corresponding to the condition determined in step S17. The control unit (100) sets the second status to "3" when the condition e is satisfied, "2" when the condition f is satisfied, "1" when the condition g is satisfied, and "0" when the condition h is satisfied. The second status represents a likelihood of dew condensation, and the risk of dew condensation increases as the numerical value of the second status increases.

In step S19, the control unit (100) compares the magnitude relationship between the first status and the second status. In step S20, the control unit (100) adjusts the number of rotations of the compressor based on the temperature and humidity of the air in one of the first status and the second status which has a higher numerical value and according to the above status. This control can adjust the evaporation temperature Te of the utilization heat exchanger (52) and further adjusts the temperature of the blown air to be supplied to the air supply duct (D3). Consequently, the dew condensation on the surface of the air supply duct (D3) and in the indoor space (5) can be reduced.

### (8-2-2) Specific Example 1

Assume that, for example, the first air has a high temperature and a high humidity, and the second air has a low temperature and a low humidity. In other words, the dew point temperature of the first air is higher than that of the second air. In this case, the first determination value TA is higher than the second determination value TB.

Specifically, assume that, for example, the first determination value TAis 13°C and the second determination value TB is 11°C. Here, assume that the evaporation temperature Te detected by the first refrigerant temperature sensor (111) is 12°C. In this case, in step S13, the condition a is satisfied because the evaporation temperature Te (=12°C) is lower than or equal to the first determination value TA(=13°C). Accordingly, in step S14, the status of the first air is 3.

On the other hand, in step S17, the condition f is satisfied because the evaporation temperature Te (=12°C) is higher than TB (=11°C) and is lower than or equal to TB + Td1 (11+1.0=12°C). Accordingly, in step S18, the status of the first air is 2.

In step S20, the control unit (100) adjusts the number of rotations of the compressor (82) based on the condition of one of the first air and the second air which has a higher status. In this example, regarding the first air, the condition a is satisfied, and thus the control unit (100) reduces the number of rotations of the compressor (82). The condition a can be regarded as a condition indicating that the air in the ceiling space (8) is likely to produce dew condensation. When the number of rotations of the compressor (82) decreases, the evaporation temperature Te increases and the temperature of the blown air increases. Consequently, the temperature of the air flowing through the air supply duct (D3) increases, and the dew condensation on the surface of the air supply duct (D3) can be thus reduced.

In this example, the dew point temperature of the first air is higher than that of the second air, and thus the first air is more likely to produce dew condensation than the second air. Accordingly, by the blow-out temperature being adjusted so that dew condensation is reduced on the surface of the air supply duct (D3), dew condensation can be reduced in the indoor space (5) as well. Thus, this control can reduce both the dew condensation on the surface of the air supply duct (D3) and the dew condensation in the indoor space (5).

### (8-2-3) Specific Example 2

Assume that, for example, the second air has a high temperature and a high humidity, and the first air has a low temperature and a low humidity. In other words, the dew point temperature of the second air is higher than that of the first air. In this case, the second determination value TB is higher than the first determination value TA.

Specifically, assume that, for example, the second determination value TB is 13°C and the first determination value TA is 11°C. Here, assume that the evaporation temperature Te detected by the first refrigerant temperature sensor (111) is 12°C. In this case, in step S17, the condition e is satisfied because the evaporation temperature Te (=12°C) is lower than or equal to the second determination value TB (=13°C). Accordingly, in step S18, the status of the second air is 3.

On the other hand, in step S13, the condition b is satisfied because the evaporation temperature Te (=12°C) is higher than TA (=11°C) and is lower than or equal to TA + Td1 (11 + 1.0 = 12°C). Accordingly, in step S14, the status of the first air is 2.

In step S20, the control unit (100) adjusts the number of rotations of the compressor (82) based on the condition of one of the first air and the second air which has a higher status. In this example, regarding the second air, the condition e is satisfied, and thus the control unit (100) reduces the number of rotations of the compressor (82). The condition e can be regarded as a condition indicating that the air in the indoor space (5) is likely to produce dew condensation. When the number of rotations of the compressor (82) decreases, the evaporation temperature Te increases and the temperature of the blown air increases. Consequently, the temperature of the air to be supplied to the indoor space (5) increases, and the dew condensation in the indoor space (5) can be reduced.

In this example, the dew point temperature of the second air is higher than that of the first air, and thus the second air is more likely to produce dew condensation than the first air. Accordingly, by the blow-out temperature being adjusted so that dew condensation is reduced in the indoor space (5), dew condensation can be reduced on the air supply duct (D3) as well. Thus, this control can reduce both the dew condensation on the surface of the air supply duct (D3) and the dew condensation in the indoor space (5).

### (8-2-4) Other Specific Examples

In the control in step S20, in this manner, the number of rotations of the compressor (82) is adjusted based on the temperature and humidity of the air which is likely to produce dew condensation. When the first air has a higher status than the second air, the control is performed based on the conditions b, c, or d in addition to the condition a described above.

When the condition b is satisfied, the control unit (100) maintains the number of rotations of the compressor (82). Here, the condition b can be regarded as a condition indicating that the air in the ceiling space (8) has a low risk of dew condensation. By maintaining the number of rotations of the compressor (82), the control unit (100) can reduce a decrease in the evaporation temperature Te and a decrease in the temperature of the blown air. Accordingly, dew condensation can be reduced on the surface of the air supply duct (D3) and in the indoor space (5).

When the condition b is satisfied, the control unit (100) increases the number of rotations of the compressor (82). The condition c can be regarded as a condition indicating that the air in the ceiling space (8) has little risk of dew condensation. By the control unit (100) increasing the number of rotations of the compressor (82), the evaporation temperature Te decreases, and the temperature of the blown air decreases. Accordingly, in the cooling operation or the like, an increase in the temperature of the room air (RA) in the indoor space (5) can be reduced, and the comfort of the indoor space (5) can be maintained. The condition indicates that the first air and the second air have almost no risk of dew condensation, and thus even when the blown air has a low temperature, dew condensation can be prevented on the surface of the air supply duct (D3) and in the indoor space (5).

When the condition d is satisfied, the control unit (100) adjusts the number of rotations of the compressor (82) by normal control. In the normal control, the control unit (100) adjusts the number of rotations of the compressor (82) so that the current evaporation temperature Te reaches the target evaporation temperature. In the cooling operation, the control unit (100) determines the target evaporation temperature according to a cooling load. The cooling load is determined by the difference between the current temperature of the room air (RA) and the set temperature of the indoor space (5). The condition d can be regarded as a condition indicating that the air in the ceiling space (8) has no risk of dew condensation. Accordingly, even when the control unit (100) executes the normal control, dew condensation on the surface of the air supply duct (D3) and in the indoor space (5) can be reduced. In the normal control, the ventilation device (10) performs air conditioning according to the cooling load and thus the comfort in the room can be secured.

In step S20, when the second air has a higher status than the first air, the control is performed based on the condition f, g, or h in addition to the condition e described above. The control based on the condition f is the same as the control based on the condition b described above. The control based on the condition g is the same as the control based on the condition c described above. The control based on the condition h is the same as the control based on the condition d described above. Thus, detailed descriptions of these controls are omitted.

### (9) Features of Embodiment

### (9-1)

The ventilation device (10) includes the control unit (100) configured to adjust the temperature of blown air to be supplied to the air supply duct (D3), based on the temperature and humidity of the air in the ceiling space (8).

Accordingly, the blow-out temperature can be adjusted so that the moisture in the air in the ceiling space (8) does not condense on the surface of the air supply duct (D3).

### (9-2)

The control unit (100) adjusts the temperature of the blown air based on the temperature and humidity of the air in the space (8) and the temperature and humidity of the air in the indoor space (5).

Accordingly, the blow-out temperature can be adjusted so that the moisture in the air in the ceiling space (8) does not condense on the surface of the air supply duct (D3) or the moisture in the air in the indoor space (5) does not condense near the air supply port (9).

### (9-3)

The control unit (100) adjusts the temperature of the blown air based on the temperature and humidity of one of the air in the space (8) and the air in the indoor space (5) which is more likely to produce dew condensation. Here, in the above-described embodiment, a likelihood of dew condensation (the status of the air) is determined by comparison between the determination value (TA, TB) based on the temperature and humidity of the air and the evaporation temperature Te.

By such adjustment to the blown-out temperature based on the temperature and humidity of the air that is likely to produce dew condensation, both the dew condensation of the air in the ceiling space (8) and the dew condensation of the air in the indoor space (5) can be reduced.

### (9-4)

The control unit (100) adjusts the evaporation temperature Te and further adjusts the temperature of the blown air by adjusting the number of rotations of the compressor (82) based on the temperature and humidity of the air in the ceiling space (8). In addition, the control unit (100) adjusts the evaporation temperature Te and further adjusts the temperature of the blown air by adjusting the number of rotations of the compressor (82) based on the temperature and humidity of the air in the indoor space (5).

Accordingly, the temperature of the blown air can be more easily adjusted to a temperature at which the dew condensation of the air in the ceiling space (8) and the indoor space (5) can be reduced.

### (10) Variations

The ventilation device (10) of the above-described embodiment may have the following variations. Thus, differences from the embodiment will be mainly described below.

### (10-1) First Variation

A control unit (100) of a first variation adjusts the evaporation temperature Te by adjusting the number of rotations of the compressor (82) in the anti-dew control. However, the control unit (100) may adjust the evaporation temperature Te by adjusting the opening degree of a valve of the refrigerant circuit (R). This valve may be an expansion valve (85), a pressure regulating valve provided on the suction side of the compressor (82), or the like.

### (10-2) Second Variation

A control unit (100) of a second variation adjusts the temperature of the blown air by controlling the reheating operation by the second heat exchange unit (52b) as a heater, based on the temperature and humidity of the air in the ceiling space (8) in the anti-dew control. In addition, the control unit (100) adjusts the temperature of the blown air by controlling the reheating operation by the second heat exchange unit (52b), based on the temperature and humidity of the air in the indoor space (5). Specifically, the control unit (100) controls the temperature of the blown air by adjusting the decompression valve (52c) and controlling the second heat exchange unit (52b) as a heater. The reheating operation corresponds to the operation of the second heat exchange unit (52b) in the reheating and dehumidifying operation described above.

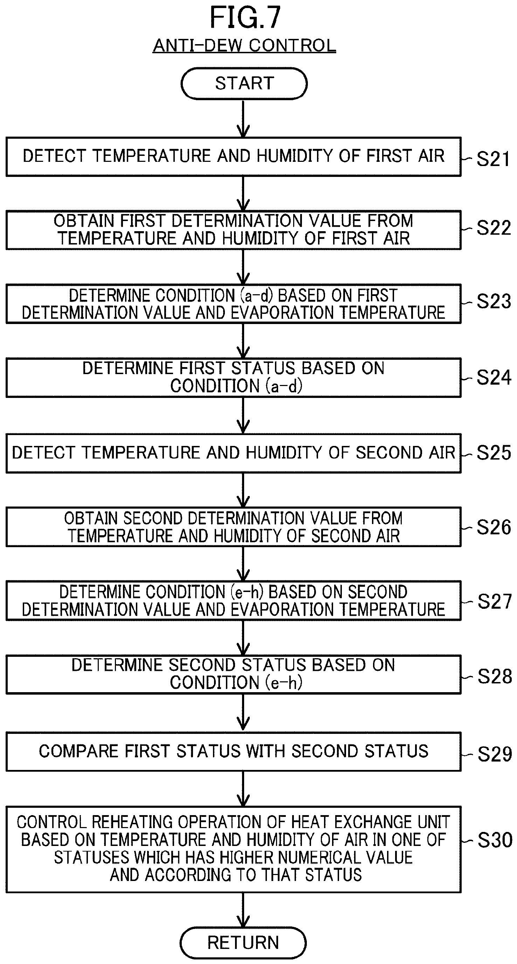

Steps S21 to S29 shown in FIG. 7 are the same as steps S11 to S19 in the above-described embodiment. In step S30, the control unit (100) controls the reheating operation of the second heat exchange unit (52b) as a heater, based on the temperature and humidity of the air in one of the first status and the second status which has a higher numerical value and according to the above status.

For example, when the condition a is satisfied when the first air is more likely to produce dew condensation than the second air, the control unit (100) causes the second heat exchange unit (52b) to execute the reheating operation in step S29. Accordingly, the air cooled in the first heat exchange unit (52a) is heated in the second heat exchange unit (52b), and thus the temperature of the blown air increases. Consequently, the dew condensation on the surface of the air supply duct (D3) can be reduced. In this case, dew condensation in the indoor space (5) can also be reduced. When the condition e is satisfied when the second air is more likely to produce dew condensation than the first air, the control unit (100) also causes the second heat exchange unit (52b) to execute the reheating operation.

For example, when the condition c is satisfied when the first air is more likely to produce dew condensation than the second air, the control unit (100) causes the second heat exchange unit (52b) to end the reheating operation of and causes the second heat exchange unit (52b) to function as an evaporator. Also when the condition g is satisfied when the second air is more likely to produce dew condensation than the first air, the control unit (100) causes the second heat exchange unit (52b) to end the reheating operation and causes the second heat exchange unit (52b) to function as an evaporator. Accordingly, an increase in the temperature of the room air (RA) in the indoor space (5) can be reduced, and also dew condensation in the ceiling space (8) and the indoor space (5) can be reduced.

Note that the second heat-exchange unit (52b) as a heater of this example is a part of the utilization heat exchanger (52). However, the heater may be a heat exchanger separate from the utilization heat exchanger (52). The heater only needs to be capable of heating air and may be a heater or a thermoelectric element, for example.

### (10-3) Third Variation

A control unit (100) of a third variation adjusts the temperature of the blown air by adjusting the volume of air of the air supply fan (22) based on the temperature and humidity of the air in the ceiling space (8) in the anti-dew control. In addition, the control unit (100) adjusts the temperature of the blown air by adjusting the volume of air of the air supply fan (22) based on the temperature and humidity of the air in the indoor space (5).

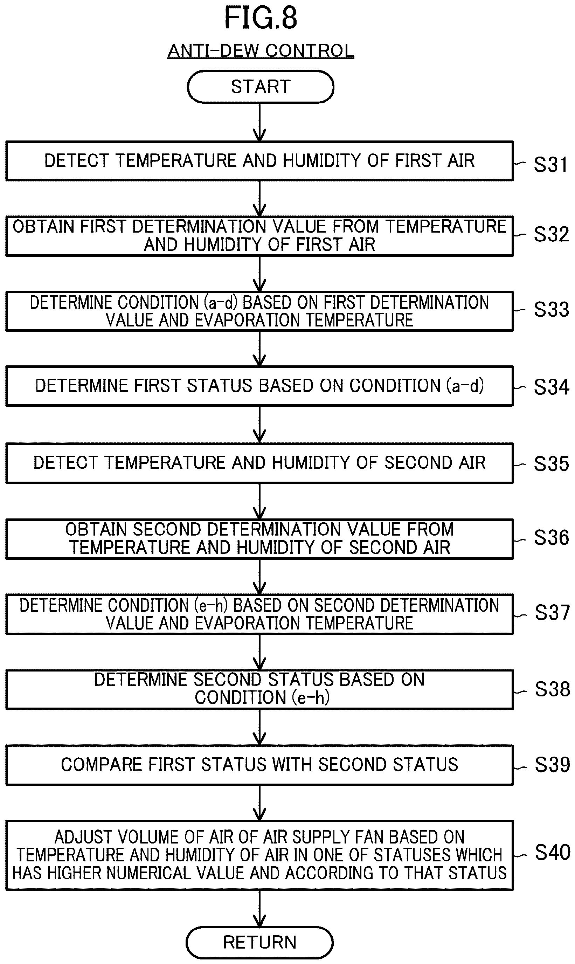

Steps S31 to S39 shown in FIG. 8 are the same as steps S11 to S19 of the above embodiment. In step S40, the control unit (100) adjusts the volume of air of the air supply fan (22) based on the temperature and humidity of one of the first air and the second air which is more likely to produce dew condensation. Specifically, the control unit (100) adjusts the volume of air of the air supply fan (22) based on the temperature and humidity of the air in one of the first status and the second status which has a higher numerical value and according to the above status.

For example, when the condition a is satisfied when the first air is more likely to produce dew condensation than the second air, the control unit (100) reduces the volume of air of the air supply fan (22). Accordingly, the flow rate of the air flowing through the air supply duct (D3) decreases, and the temperature of the surface of the air supply duct (D3) increases, and thus dew condensation on the surface of the air supply duct (D3) can be reduced. In this case, dew condensation in the indoor space (5) can also be reduced. Also when the condition e is satisfied when the second air is more likely to produce dew condensation than the first air, the control unit (100) reduces the volume of air of the air supply fan (22).

When the condition b is satisfied when the first air is more likely to produce dew condensation than the second air, the control unit (100) maintains the volume of air of the air supply fan (22). When the condition f is satisfied when the second air is more likely to produce dew condensation than the first air, the control unit (100) maintains the volume of air of the air supply fan (22).

When the condition c is satisfied when the first air is more likely to produce dew condensation than the second air, the control unit (100) increases the volume of air of the air supply fan (22). When the condition g is satisfied when the second air is more likely to produce dew condensation than the first air, the control unit (100) increases the volume of air of the air supply fan (22). Accordingly, the comfort in the indoor space (5) can be secured, whereas dew condensation in the ceiling space (8) and in the indoor space (5) can be reduced.

When the condition d is satisfied when the first air is more likely to produce dew condensation than the second air, the control unit (100) executes the normal control of the ventilation device (10). When the condition h is satisfied when the second air is more likely to produce dew condensation than the first air, the control unit (100) executes the normal control of the ventilation device (10). In the normal control, the control unit (100) changes the volume of air of the air supply fan (22) according to the number of rotations of the compressor (82). The control unit (100) increases the volume of air of the air supply fan (22) as the number of rotations of the compressor (82) increases. The control unit (100) reduces the volume of air of the air supply fan (22) as the number of rotations of the compressor (82) decreases.

In the anti-dew control of the third variation, the control unit (100) may control the exhaust fan (23) so that the exhaust fan (23) has the same volume of air as the air supply fan (22). Accordingly, the amount of air supplied to the indoor space (5) and the amount of air discharged to the outdoor space (6) can be balanced.

### (10-4) Fourth Variation

In the above-described embodiment, the control unit (100) may control the temperature of the blown air to be supplied to the air supply duct (D3), based on only the temperature and humidity of the first air.

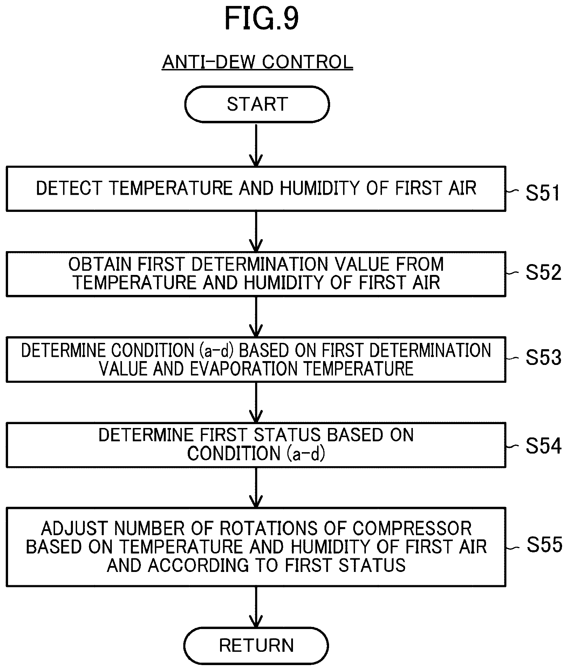

As shown in FIG. 9, when the anti-dew control starts, in step S51, the first temperature sensor (125) detects the temperature of the air, which is the first air, in the ceiling space (8). In addition, the first humidity sensor (126) detects the humidity of the first air. In step S52, the control unit (100) obtains a first determination value TA from the temperature and humidity of the first air. In step S53, the control unit (100) refers to the relationship shown in FIG. 6 to determine which one of the conditions (a) to (d) is satisfied based on the first determination value TA and the evaporation temperature Te. In step S54, the control unit (100) obtains a first status corresponding to the condition determined in step S53. In step S55, the control unit (100) adjusts the number of rotations of the compressor (82) according to the first status based on the temperature and humidity of the first air. The specific control in step S55 is the same as that in step S20 in the above-described embodiment. Accordingly, the blow-out temperature can be adjusted so that the moisture in the air in the ceiling space (8) does not condense on the surface of the air supply duct (D3).

Note that in step S55 of the fourth variation, the control unit (100) may perform the control of the reheating operation of the second variation or the control of the air supply fan (22) of the third variation.

### (10-5) Fifth Variation

In the anti-dew control of the above embodiment, the control unit (100) may employ another method to determine one of the first air and the second air which has a higher risk of dew condensation. For example, the control unit (100) may calculate the difference between the evaporation temperature Te and the first determination value TA (Te-TA=ΔT1) and the difference between the evaporation temperature Te and the second determination value TB (Te-TB=ΔT2), determine that the air with a smaller difference has a higher risk of dew condensation, and adjust the blow-out temperature based on the temperature and humidity of this air.

Note that in the fifth variation, the control unit (100) may perform the control of the reheating operation of the second variation or the control of the air supply fan (22) of the third variation.

### (11) Other Embodiments

The foregoing embodiment and variations thereof may be modified as follows.

The control unit (100) may estimate a likelihood of dew condensation of air using an index other than the determination values (TA, TB) and the evaporation temperature Te described above. Examples of this index include the dew point temperature of the first air, the dew point temperature of the second air, the temperature of the blown air to be supplied to the air supply duct (D3), and the like.

The first heat exchanger (21) may be a sensible heat exchanger that transfers only sensible heat between the air flowing through the air supply path (13) and the air flowing through the exhaust path (14).

The switching mechanism (84) is not necessarily the four-way switching valve. The switching mechanism (84) may be a combination of four flow paths and on-off valves that open and close these four flow paths, or may be a combination of two three-way valves.

The expansion valve (85) is not necessarily the electronic expansion valve, and may be a temperature-sensitive expansion valve or a rotary expansion mechanism.

A plurality of air supply ducts (D3) may be connected to a plurality of air supply paths (13). In this case, the outlet ends of the plurality of air supply paths (13) are joined to one indoor space (5) or a plurality of indoor spaces (5). Each of the air supply ducts (D3) may include one main pipe joined to the air supply path (13) and a plurality of branch pipes branching from the main pipe. In this case, the outlet ends of the branch pipes communicate with one indoor space (5) or the plurality of indoor spaces (5).

While the embodiment and variations thereof have been described above, it will be understood that various changes in form and details may be made without departing from the spirit and scope of the claims. The elements according to the embodiment, the variations thereof, and the other embodiments may be combined and replaced with each other.

As a reference aspect, the anti-dew control described above may be applied to a ventilation device (10) which does not include the first heat exchanger (21) but includes the second heat exchanger (52). That is, the control according to the present disclosure may be applied to an air conditioner with an indoor heat exchanger.

The expressions of "first," "second," and "third" described above are used to distinguish the terms to which these expressions are given, and do not limit the number and order of the terms.

### INDUSTRIAL APPLICABILITY

As can be seen from the foregoing description, the present disclosure is useful for a ventilation device.

### DESCRIPTION OF REFERENCE CHARACTERS

- 5: Indoor Space
- 8: Ceiling Space
- 10: Ventilation Device
- 12: Casing
- 13: Air Supply Path
- 14: Exhaust Path
- 21: Total Heat Exchanger (First Heat Exchanger)
- 22: Air Supply Fan
- 23: Exhaust Fan
- 52: Utilization Heat Exchanger (Second Heat Exchanger)
- 52b: Second Heat Exchange Unit (Heater)
- 82: Compressor
- 100: Control Unit
- D3: Air Supply Duct (Duct)
- OA: Outdoor Air
- R: Refrigerant Circuit
- RA: Room Air

## Claims

1. A ventilation device comprising:
a casing (12) having an air supply path (13) for supplying outdoor air to an indoor space (5) through a duct (D3) disposed in a ceiling space (8) and an exhaust path (14) for discharging indoor air to an outside of a room;
an air supply fan (22) disposed in the air supply path (13);
an exhaust fan (23) disposed in the exhaust path (14);
a first heat exchanger (21) configured to allow heat exchange between air flowing through the air supply path (13) and air flowing through the exhaust path (14);
a refrigerant circuit (R) including a compressor (82) and a second heat exchanger (52) as an evaporator disposed downstream of the first heat exchanger (21) in the air supply path (13); and
a control unit (100) configured to adjust a temperature of blown air supplied to the duct (D3) based on a temperature and a humidity of air in the ceiling space (8).

2. The ventilation device of claim 1, wherein
the control unit (100) is configured to adjust the temperature of the blown air based on the temperature and the humidity of the air in the ceiling space (8) and a temperature and a humidity of air in the indoor space (5).

3. The ventilation device of claim 1 or 2, wherein
the control unit (100) is configured to adjust the temperature of the blown air based on the temperature and the humidity of one of the air in the ceiling space (8) and the air in the indoor space (5) which is more likely to produce dew condensation.

4. The ventilation device of any one of claims 1 to 3, wherein
the control unit (100) is configured to adjust the temperature of the blown air by adjusting an evaporation temperature of a refrigerant in the second heat exchanger (52) as the evaporator based on the temperature and the humidity of the air in the ceiling space (8).

5. The ventilation device of any one of claims 1 to 4, wherein
the control unit (100) is configured to adjust the temperature of the blown air by adjusting the number of rotations of the compressor (82) based on the temperature and the humidity of the air in the ceiling space (8).

6. The ventilation device of any one of claims 1 to 3, further comprising:
a heater (52b) for a reheating operation of heating air having passed through the second heat exchanger (52) as the evaporator,
wherein
the control unit (100) is configured to adjust the temperature of the blown air by controlling the reheating operation by the heater (52b) based on the temperature and the humidity of the air in the ceiling space (8).

7. The ventilation device of any one of claims 1 to 3, wherein
the control unit (100) is configured to adjust the temperature of the blown air by adjusting a volume of air of the air supply fan (22) based on the temperature and the humidity of the air in the ceiling space (8).
